# EUROPÄISCHE PATENTSCHRIFT

(11) **EP 0 518 227 B1**
(45) Veröffentlichungstag und Bekanntmachung des Hinweises auf die Patenterteilung: **21.09.1994**
(21) Anmeldenummer: 92109518.8
(22) Anmeldetag: 05.06.1992
(51) Int. Cl.: F16L 59/12

(54) **Rohrbefestigungsschelle**
Pipe fastening clamp
Collier de serrage pour tuyaux

(30) Priorität: 11.06.1991 DE 4119178
(43) Veröffentlichungstag der Anmeldung: 16.12.1992
(73) Patentinhaber: Korff, Rainer, D-63128 Dietzenbach (DE); Moritz, Ralf, D-28844 Weyhe (DE)
(72) Erfinder: Korff, Rainer, D-63128 Dietzenbach (DE); Moritz, Ralf, D-28844 Weyhe (DE)
(74) Vertreter: Köhler, Günter, Dipl.-Ing.

(56) Entgegenhaltungen:
- DE-A- 2 854 924
- DE-A- 3 808 140
- DE-U- 8 615 502
- US-A- 4 852 831

## Beschreibung

Die Erfindung bezieht sich auf eine Rohrbefestigungsschelle für kalte Fluide führende Rohre mit zwei Halbschalen aus thermisch isolierendem Kunststoff, in denen Stahlbügel eingebettet sind, die an den Enden der Halbschalen radial vorstehende Befestigungslaschen bilden.

Bei einer bekannten Schelle dieser Art (DE 28 54 924 A1) kann sich das Rohr leicht in der Schelle verschieben, z.B. aufgrund thermischer Längenänderungen des Rohres, was an sogenannten "Festpunkten" der Rohrbefestigung unerwünscht ist.

Der Erfindung liegt die Aufgabe zugrunde, eine Rohrbefestigungsschelle der gattungsgemäßen Art anzugeben, die es ermöglicht, einen Festpunkt auszubilden, der hohen durch das Rohr ausgeübten Axialkräften standhält.

Erfindungsgemäß ist diese Aufgabe dadurch gelöst, daß in jeder Halbschale wenigstens zwei durch axiale Stege verbundene Stahlbügel eingebettet sind und daß die Halbschalen auf ihrer Innenseite Halbringnuten aufweisen, die im zusammengesetzten Zustand der Halbschalen eine geschlossene Ringnut zur Aufnahme eines an dem zu befestigenden Rohr vorgesehenen Ringflansches bilden.

Bei dieser Ausbildung kann ein am Rohr ausgebildeter, z.B. angeschweißter, Ringflansch, der in die innere Ringnut der Schelle eingreift, eine Axialverschiebung des Rohres in der Schelle verhindern, wobei gleichzeitig die Verstrebung der Stahlbügel durch die axialen Stege die Aufnahme sehr hoher Kräfte sicherstellt. Die Aufteilung der Schelle in Halbschalen ermöglicht hierbei das Herumlegen der Halbschalen um das Rohr unter Aufnahme des Ringflansches in der Ringnut.

Zwischen den im zusammengesetzten Zustand einander zugekehrten Stirnflächen der Halbschalen kann eine dauerelastische Dichtungspaste vorgesehen sein, die einen Dampfdurchgang im Fugenbereich vermeidet.

Bei dem Kunststoff kann es sich um einen oberflächenverdichteten Schaumstoff handeln, der eine entsprechend hohe mechanische Festigkeit aufweist.

Insbesondere kann der Kunststoff eine Dichte von wenigstens etwa 250 kg/m³ und einen Diffusionswiderstandsfaktor » von wenigstens etwa 2500 aufweisen, so daß eine hohe Festigkeit der Halbschalen sichergestellt ist.

Sodann kann dafür gesorgt sein, daß die Halbschalen von einem Mantel aus Stahlblech umgeben sind, der axial über den Rand der Halbschalen vorsteht. Dieser Mantel bildet eine Dampfsperre und einen Oberflächenschutz.

Die Erfindung und ihre Weiterbildungen werden nachstehend anhand der Zeichnung eines bevorzugten Ausführungsbeispiels näher beschrieben. Es zeigen:
Fig. 1 eine Seitenansicht einer erfindungsgemäßen Rohrbefestigungsschelle,
Fig. 2 eine Vorderansicht einer in der Rohrbefestigungsschelle nach Fig. 1 eingebetteten Stahlbügelanordnung und
Fig. 3 eine Hälfte der Rohrbefestigungsschelle nach Fig. 1 im montierten Zustand auf dem zu befestigenden Rohr, teilweise im Schnitt.

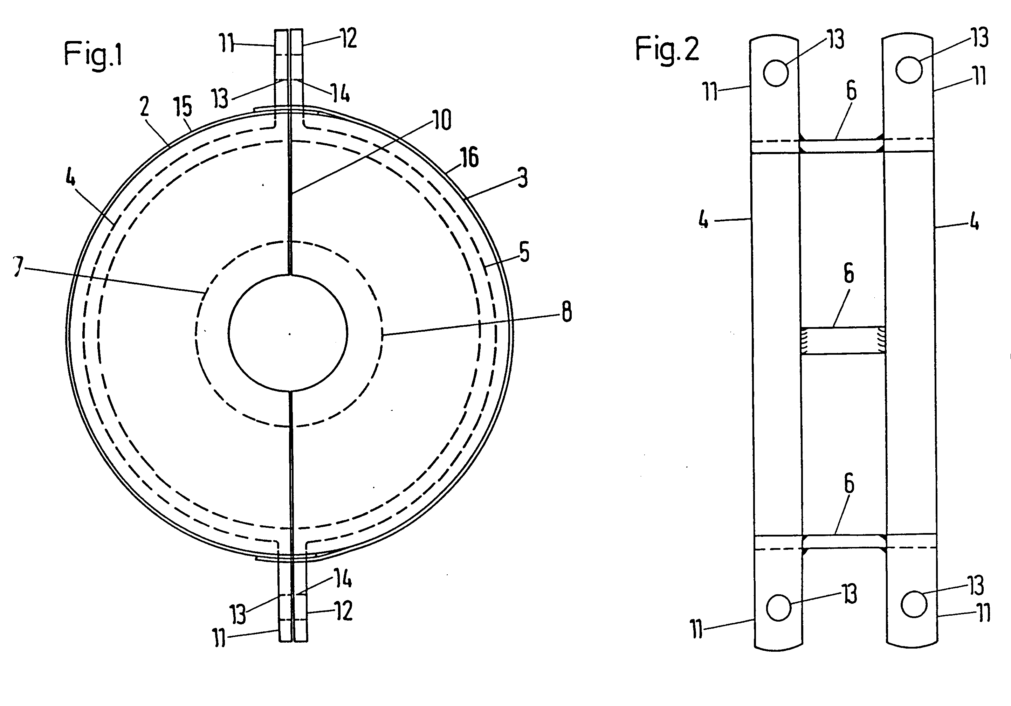

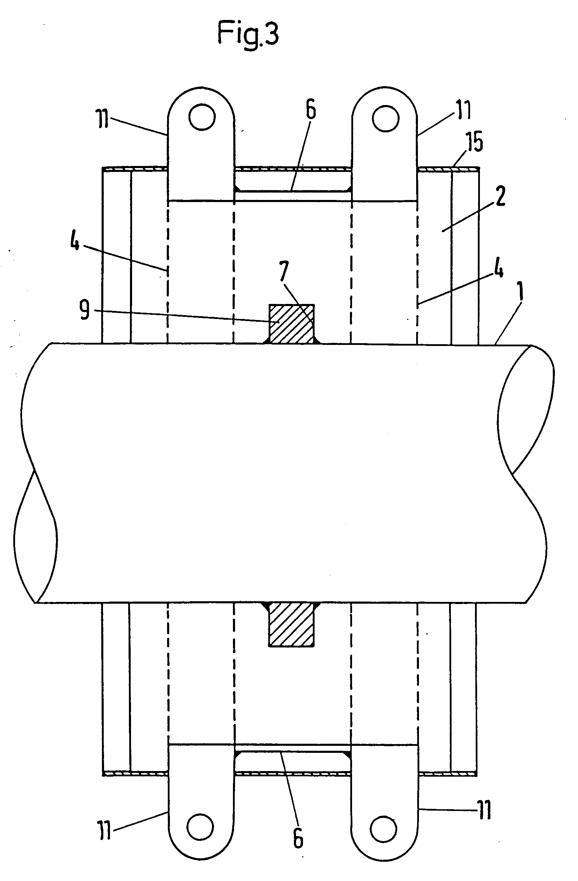

Die dargestellte Rohrbefestigungsschelle dient zum Befestigen eines Rohres 1, durch das ein kaltes Fluid mit einer Temperatur von bis zu etwa -150°C hindurchgeleitet wird. Sie weist zwei Halbschalen 2 und 3 aus thermisch isolierendem Polyurethan-Schaumstoff mit einer Dichte von wenigstens etwa 250 kg/m³ und einen Diffusionswiderstandsfaktor » von wenigstens 2500, vorzugsweise von mehr als 10000, auf. In den Halbschalen sind jeweils zwei Stahlbügel 4 und 5 eingebettet, die durch axiale Stege 6 miteinander verbunden sind, wobei die Stege 6 an den Stahlbügeln 4 bzw. 5 angeschweißt sind. Die Halbschalen 2, 3 sind auf ihrer Innenseite mit Halbringnuten 7 und 8 versehen, die im zusammengesetzten Zustand der Halbschalen 2, 3 gemäß Fig. 1 eine geschlossene Ringnut zur Aufnahme eines an dem zu befestigenden Rohr 1 vorgesehenen Ringflansches 9 (Fig. 3) bilden. Der Ringflansch 9 ist am Rohr 1 angeschweißt.

Zwischen den im zusammengesetzten Zustand einander zugekehrten Stirnflächen der Halbschalen 2, 3 ist eine dauerelastische Dichtungspaste 10 (Fig. 1) vorgesehen.

An den Enden der Halbschalen 2, 3 bilden die Stahlbügel 4, 5 radial vorstehende Befestigungslaschen 11 und 12 mit Löchern 13 und 14 zur Durchführung von Verbindungsschrauben, die gleichzeitig der Befestigung an ortsfesten Haltern dienen.

Außen sind die Halbschalen 2 und 3 von einem Mantel aus zwei weiteren, sich an den Enden etwas überlappenden Halbschalen 15 und 16 aus Stahlblech umgeben, die axial über den Rand der Halbschalen 2 und 3 vorstehen. Die Halbschalen 15 und 16 bilden einen Oberflächenschutz und eine Dampfsperre.

Im montierten Zustand hält die Rohrbefestigungsschelle sehr hohen Kräften stand, die bestrebt sind, das Rohr 1 axial relativ zur Rohrbefestigungsschelle zu verschieben. Kälte- bzw. Wärmebrücken im Bereich der Rohrbefestigung werden durch den isolierenden Kunststoff zwischen der tragenden Metallbügelanordnung und dem Rohr vermieden. Durch den hohen Dampfdiffusionswiderstand entfallen zusätzliche Dampfbremsen. Die Querverstrebung der im Dämmstoff integrierten Stahlbügel 4, 5 ermöglicht ebenfalls die Aufnahme sehr hoher axialer Kräfte. Die Dichtungspaste 10 verhindert einen Dampfdurchgang im Fugenbereich.

## Patentansprüche

1. Rohrbefestigungsschelle für kalte Fluide führende Rohre (1), mit zwei Halbschalen (2, 3) aus thermisch isolierendem Kunststoff, in denen Stahlbügel (4, 5) eingebettet sind, die an den Enden der Halbschalen (2, 3) radial vorstehende Befestigungslaschen (11, 12) bilden, **dadurch** **gekennzeichnet**, daß in jeder Halbschale (2, 3) wenigstens zwei durch axiale Stege (6) verbundene Stahlbügel (4, 5) eingebettet sind und daß die Halbschalen (2, 3) auf ihrer Innenseite Halbringnuten (7, 8) aufweisen, die im zusammengesetzten Zustand der Halbschalen (2, 3) eine geschlossene Ringnut zur Aufnahme eines an dem zu befestigenden Rohr (1) vorgesehenen Ringflansches (9) bilden.

2. Schelle nach Anspruch 1,
**dadurch** **gekennzeichnet**,
daß zwischen den im zusammengesetzten Zustand einander zugekehrten Stirnflächen der Halbschalen (2, 3) eine dauerelastische Dichtungspaste (10) vorgesehen ist.

3. Schelle nach Anspruch 1 oder 2,
**dadurch gekennzeichnet,**
daß der Kunststoff oberflächenverdichteter Schaumstoff ist.

4. Schelle nach einem der Ansprüche 1 bis 3,
**dadurch gekennzeichnet**,
daß der Kunststoff eine Dichte von wenigstens etwa 250 kg/m³ und einen Diffusionswiderstandsfaktor » von wenigstens etwa 2500 hat.

5. Schelle nach einem der Ansprüche 1 bis 4,
**dadurch gekennzeichnet**,
daß die Halbschalen (2, 3) von einem Mantel (15, 16) aus Stahlblech umgeben sind, der axial über den Rand der Halbschalen vorsteht.

## Claims

1. A pipe fastening clamp for pipes (1) conducting cold fluids, comprising two semishells (2, 3) of thermically isolating synthetic material, in which semishells (2, 3) steel shackles (4, 5) are embedded, the shackles providing fastening ears (11, 12) projecting radially at the ends of the semishells, **characterised** **in** that at least two steel shackles (4, 5) connected by axial bridges (6) are embedded in each semishell (2, 3), and that the semishells (2, 3) are provided at their inner sides with semi-annular grooves (7, 8) providing in the closed state of the semishells (2, 3) a closed annular groove for receiving an annular flange (9) provided at the pipe (1) to be fastened.

2. The pipe of claim 1, characterised in that a permanently elastic sealing paste (10) is provided between the opposing front surfaces of the semishells (2, 3) in the assembled state.

3. The pipe of claim 1 or 2, characterised in that the synthetic material is a foam material having a densified surface.

4. The pipe of anyone of claims 1 to 3, characterised in that the synthetic material has a density of about 250 kg/m³ and a diffusion resitivity factor » of at least about 2500.

5. The pipe of anyone of claims 1 to 4, characterised in that the semishells (2, 3) are surrounded by a sheet steel shell (15, 16) projecting axially beyond the margin of the semishells (2, 3).

## Revendications

1. Collier de serrage pour tuyaux (1) acheminant des fluides froids, comportant deux demi-coquilles (2, 3) constituées d'une matière plastique thermo-isolante, dans lesquelles sont noyés des étriers d'acier (4, 5) qui forment des éclisses de fixation (11, 12) faisant saillie radialement aux extrémités des demi-coquilles (2, 3), caractérisé en ce que, dans chaque demi-coquille (2, 3) sont noyés au moins deux étriers d'acier (4, 5) reliés par des barrettes axiales (6) et les demi-coquilles (2, 3) présentent sur leur partie interne des demi-rainures annulaires (7, 8) qui forment, lorsque l'on assemble les demi-coquilles (2, 3), une rainure annulaire fermée pour recevoir une bride annulaire (9) prévue sur le tuyau à fixer (1).

2. Collier selon la revendication 1, caractérisé en ce qu'entre les faces frontales des demi-coquilles (2, 3) tournées l'une vers l'autre à l'état assemblé, on prévoit un mastic d'étanchéité à élasticité permanente (10) qui évite le passage de vapeur d'eau dans la zone de la jonction.

3. Collier selon la revendication 1 ou 2, caractérisé en ce que la matière plastique est une matière expansée densifiée en surface.

4. Collier selon l'une quelconque des revendications 1 a 3, caractérisé en ce que la matière plastique peut présenter un poids spécifique d'au moins environ 250 kg/m³ et un facteur de résistance à la diffusion » d'au moins environ 2500.

5. Collier selon l'une quelconque des revendications 1 à 4, caractérisé en ce que les demi-coquilles (2, 3) sont entourées d'une enveloppe (15, 16) de tôle d'acier faisant saillie axialement au-dessus du bord des demi-coquilles.
